# EUROPÄISCHE PATENTSCHRIFT

(11) **EP 0 806 282 B1**
(45) Veröffentlichungstag und Bekanntmachung des Hinweises auf die Patenterteilung: **22.08.2001**
(21) Anmeldenummer: 97107449.7
(22) Anmeldetag: 06.05.1997
(51) Int. Cl.: B29C 47/76, B29C 47/10

(54) **Extruder für Kunststoffgranulat**
Extruder for plastic granules
Extrudeuse pour granulés en matière synthétique

(30) Priorität: 10.05.1996 DE 19618921
(43) Veröffentlichungstag der Anmeldung: 12.11.1997
(73) Patentinhaber: B a r m a g AG, D-42897 Remscheid (DE)
(72) Erfinder: Dickmeiss, Friedel, 52249 Eschweiler (DE); Schäfer, Klaus, Dr., 42897 Remscheid (DE); Imping, Wolfgang, 42897 Remscheid (DE)
(74) Vertreter: Kahlhöfer, Hermann, Dipl.-Phys.

(56) Entgegenhaltungen:
- EP-A- 0 134 977
- DE-A- 4 428 867
- DE-A- 4 429 390
- FR-A- 2 297 124
- US-A- 2 783 498
- US-A- 3 217 783
- US-A- 3 493 031
- US-A- 3 500 901

## Beschreibung

Die Erfindung betrifft einen Extruder für Kunststoffgranulat gemäß Oberbegriff von Anspruch **1**.

Beim Extrusionsprozeß von Kunststoffgranulat, insbesondere für ein Polymer, welches beispielsweise für einen Spinnprozeß geeignet ist, müssen im allgemeinen die Verfahrensschritte Trocknen, Einziehen, Aufschmelzen, Entgasen und Ausbringen durchlaufen werden. Bei den herkömmlichen Systemen wird der erste Verfahrensschritt des Trocknens mittels eines Trockners realisiert, welcher im allgemeinen unabhängig vom eigentlichen Extrudiervorgang in einem in einer separaten Trocknungseinrichtung kontinuierlich oder auch diskontinuierlich ablaufenden Verfahren durchgeführt wird. Das spinntrockene Granulat wird anschließend einem Extruder zugeführt, in welchem die weiteren Verfahrensschritte bis zur Ausbringung ablaufen, wobei die Entgasung unmittelbar vom Trocknungsgrad des Granulats abhängt.

In EP 0 134 977 B1 ist ein Extruder der eingangs genannten Art beschrieben. Er bildet eine Vorrichtung zum Entfernen von flüchtigen Bestandteilen aus Kunststoffmaterial, welches zum Formen durch eine Plastifizierungsschnecke gefördert und plastifiziert wird. Diese Plastifizierungsschnecke ist ein einem beheizten Zylinder angeordnet, durch welche das partikelförmige Kunststoffmaterial aufgenommen wird. Die Plastifizierungsschnecke besteht aus einem eigentlichen Plastifizierungsabschnitt und einem dazu stromauf angeordneten Förderabschnitt. Eine stromauf zu dieser Plastifizierungsschnecke angeordnete zusätzliche Förderschnecke befördert das zu extrudierende Material in einen Saugkanal, von welchem es in den Förderabschnitt der Plastifizierungsschnecke fällt. Da der Zylinder, in welchem die Plastifizierungsschnecke arbeitet, beheizt ist und da dem zu extrudierenden Material durch die Arbeit der Plastifizierungsschnecke Energie zugeführt wird, entweichen flüchtige Bestandteile, so daß das Granulat auch in gewissem Maße getrocknet werden kann. Diese flüchtigen Bestandteile werden über die Saugleitung aus dem Zylinder, in welchem die Plastifizierungsschnecke arbeitet, abgeführt. Um dieses Abführen zu gewährleisten, sind die Förderschnecke und die Plastifizierungsschnecke so angetrieben, daß nur eine solche Menge an Granulat der Plastifizierungsschnecke zugeführt wird, daß diese im Bereich der Saugleitung, das heißt in deren Förderabschnitt, nur teilweise gefüllt ist.

Bezüglich der Effektivität der Trocknung des Granulats besteht der Nachteil dieser bekannten Einrichtung unter anderem darin, daß das Granulat nur indirekt beheizt wird. Zum einen treten dadurch Energieverluste auf, und zum anderen ist darüber hinaus eine zusätzliche Einrichtung erforderlich, welche einen Unterdruck zum Absaugen der flüchtigen Bestandteile gewährleistet, wofür zusätzlich Energie benötigt wird. Deshalb kann die bekannte Einrichtung nur bedingt zum Trocknen des Granulats eingesetzt werden. Sie eignet sich vielmehr in erster Linie zum Entfernen von flüchtigen Bestandteilen aus einem zu extrudierenden Kunststoffmaterial.

In der DE 44 28 867 A1 ist eine Maschine beschrieben und dargestellt, die zur direkten Verarbeitung von unzerkleinerten oder grob vorzerkleinerten thermoplastischen Formteilen und Halbzeugen dient. Dabei sollen neue Produkte wie z.B. Kassettengehäuse, Büroartikel, Tüten oder Halbzeuge wie z.B. Granulat, Profile und Folien hergestellt werden. Bei dieser bekannten Maschine ist einem üblichen Extruder ein Einzugsbereich vorgeschaltet, in dem die Extruderschnecke einen merklich vergrößerten Durchmesser aufweist. Die unzerkleinerten oder nur grob zerkleinerten thermoplastischen Formteile und Halbzeuge werden durch einen Luft- oder sonstigen Förderstrom in den Einzugsbereich des die Extruderschnecke umgebenden Zylinders gesaugt, dadurch zwischen die Verdrängerelemente der Schnecke gebracht, verdichtet und zu dem nachgeschalteten Extruder gefördert. Da der Luftstrom zum Ansaugen der Formteile und Halbzeuge auch ein Heißluftstrom sein kann, läßt sich eine Trocknungswirkung erzielen, und der Einzugsbereich der Maschine kann als Trocknungskammer bezeichnet werden, in dem als Förderschnecke derjenige Teil der Extruderschnecke angeordnet ist, dessen Durchmesser vergrößert ist.

Diese bekannte Maschine ist nicht zum Aufschmelzen von Kunststoffgranulat vorgesehen, vielmehr ist in der DE 44 28 867 A1 ausdrücklich angegeben, daß Granulat ein Endprodukt dieser Maschine sein soll (Spalte 1, Zeilen 14 bis 18, Zusammenfassung). Granulat ließe sich auf dieser Maschine auch nicht verarbeiten, weil es in seiner geringen Korngröße die in der Zylinderwand des Einzugsbereichs angeordneten Bohrungen zum Ansaugen des Luftstroms verstopfen würde. Die Führung und Bemessung des von oben nach unten gerichteten Luftstroms richtet sich hauptsächlich danach, die grobstückigen Formteile und Halbzeuge anzusaugen und zu verdichten. Deshalb müssen bei den Funktionen des Entgasens und Trocknens Kompromisse geschlossen, insbesondere eine stärkere Erwärmung des Materials im Bereich der Förderschnecke vermieden werden.

Es ist deshalb die Aufgabe der Erfindung, einen Extruder der eingangs genannten Art zu schaffen, welcher in kompakter Bauweise ausgeführt ist, welcher neben einem Einziehen, Aufschmelzen, Entgasen und Ausbringen von Kunststoffgranulat auch dessen effektives Trocknen gewährleistet und welcher energieökonomisch betreibbar ist.

Diese Aufgabe wird durch einen Extruder mit den Merkmalen gemäß Anspruch 1 gelöst. Zweckmäßige Weiterbildungen sind in den abhängigen Ansprüchen definiert.

Gemäß der Erfindung weist der Extruder für Kunststoffgranulat, welches insbesondere ein für den Spinnprozeß geeignetes Polymer sein kann, eine Extruderschnecke mit einem Plastifizier- und Förderabschnitt auf, welche in einem beheizbaren Zylinder mittels einer Antriebseinrichtung drehbar angeordnet ist. Desweiteren ist der Extruder in einer integrierten Baueinheit zweistufig ausgebildet, wobei der Extruderschnecke eine Förderschnecke vorgeschaltet ist, welche in einer Trocknungskammer angeordnet ist. Diese Förderschnecke fördert das Kunststoffgranulat kompressionsfrei zur Extruderschnecke. Erfindungsgemäß weist die Förderschnecke gegenüber der Extruderschnecke einen größeren Außendurchmesser auf. Bevorzugtermaßen ist die Förderschnecke mit einem größer eingeschnittenen Verdrängerelement versehen als die Extruderschnecke. Desweiteren ist die Förderschnecke zum Trocknen des Kunststoffgranulats beheizbar ausgebildet. Durch diese Ausgestaltung der Förderschnecke wird erreicht, daß die Förderschnecke eine große Wärme abgebende Oberfläche bildet, die unmittelbar die Wärme an das anliegende Kunststoffgranulat abgibt. Die geometrische Ausgestaltung erlaubt zudem lange Verweilzeiten des Granulats innerhalb der Trocknungskammer, so daß ein gleichmäßiger und sehr hoher Trocknungsgrad des Kunststoffgranulats erreicht wird. Das Verdrängerelement wird hierbei durch eine an der Förderschnecke spiralförmig umlaufende Schnecke gebildet.

Um die Trocknung des Kunststoffgranulats zu erhöhen, ist es von Vorteil, wenn zwischen der Förderschnecke und der Trocknungskammer ein Luftspalt ausgebildet ist, so daß sich die Verweilzeiten des Granulats wesentlich erhöhen bzw. die Förderwirkung verringert.

Bei einer besonders vorteilhaften Ausbildung der Erfindung ist die Förderschnecke mit mehreren am Umfang angeordneten Verdrängerelementen ausgebildet. Dabei können die Verdrängerelemente als Schaufeln, Paddel usw. ausgeführt sein. Derartige Verdrängerelemente führen zu einem sehr guten Vermischen des Kunststoffgranulates. Damit wird die Gleichmäßigkeit der Trocknung innerhalb des Granulats nochmals verbessert.

Die Trocknungswirkung in der Trocknungskammer läßt sich erfindungsgemäß durch Zufuhr eines Trocknungsmediums weiter verbessern, mit welchem das Kunststoffgranulat zu dessen Trocknung beaufschlagt wird. Dadurch, daß die Verdrängerelemente an der Förderschnecke so angeordnet sind, daß das Kunststoffgranulat stark vermischt wird bei geringer Förderwirkung, und dadurch, daß in dem Bereich der Trocknungskammer durch Zufuhr eines Trocknungsmediums ein aktiver Trocknungsprozeß realisiert wird, ist es möglich, ein trockenes Granulat zu erzeugen, was in der weiteren Bearbeitung im Extruder im wesentlichen keiner Entgasung bedarf.

Damit der Trocknungsprozeß effektiv realisiert werden kann, wird über einen Einlaßrichter dieser Trocknungskammer nur so viel Granulat zugeführt, daß der Raum zwischen den Verdrängerelementen der Förderschnecke und der Trocknungskammer noch ein zuverlässiges und intensives Umströmen der zu trocknenden Granulatteilchen gewährleisten kann. Vorzugsweise wird das Trocknungsmedium mit einem entsprechenden Überdruck in die Trocknungskammer eingeblasen, so daß es, nachdem es den Trocknungsvorgang durchlaufen hat, über eine Entweichleitung abgeführt wird. Um die im Trocknungsmedium noch enthaltene Energie weiter nutzen zu können, kann das Trocknungsmedium recykliert werden, wobei es vor seiner erneuten Einblasung in die Trocknungskammer wieder so weit erwärmt werden muß, daß der Temperaturverlust des Trocknungsmediums infolge der Wärmeabgabe an die Granulatteilchen ausgeglichen wird.

Gemäß einem bevorzugten Ausführungsbeispiel besitzt die Förderschnecke der Trocknungskammer einen im Inneren ihrer Welle ausgebildeten Kanal, das heißt sie ist hohl ausgebildet, sowie mit diesem Kanal verbundene, zwischen den Verdrängerelementen angeordnete Austrittsbohrungen, über welche das Trocknungsmedium dem eigentlichen Trocknungsbereich zwischen den Verdrängerelementen der Förderschnecke zuführbar ist. Vorzugsweise sind diese Austrittsbohrungen radial über dem Umfang der Welle der Förderschnecke zwischen den Verdrängerelementen angeordnet. Bevorzugt sind sie über den Umfang gleichmäßig angeordnet. Der besondere Vorteil dieses Ausführungsbeispiels liegt darin, daß die Förderschnecke durch das heiße Trocknungsmedium beheizt wird. Je nach Gestaltung der Kanäle kann eine elektrische Beheizung der Förderschnecke entfallen.

Gemäß einem weiteren bevorzugten Ausführungsbeispiel wird das Trocknungsmedium in die Trocknungskammer so eingeleitet, daß es im Gegenstrom zu der Förderrichtung des Kunststoffgranulates geleitet wird. Vorzugsweise ist das Trocknungsmedium heiße Luft.

Gemäß einem weiteren bevorzugten Ausführungsbeispiel sind die Extruderschnecke und die Förderschnecke derart zueinander angeordnet, daß beide Schnecken gemeinsam mittels einer Antriebseinrichtung angetrieben werden. Hierbei kann die Übertragung der Antriebsbewegung durch ein Getriebe zwischen der Extruderschnecke und der Förderschnecke erfolgen. Dies ist besonders vorteilhaft, um beliebige Übersetzungen realisieren zu können. Eine besonders kompakte Bauweise wird dadurch erreicht, daß die Extruderschnecke und die Förderschnecke auf einer gemeinsamen Welle angeordnet sind.

Ein weiterer Vorteil einer derartigen erfindungsgemäßen Extrudiervorrichtung besteht darin, daß ein sehr kompakter Extruder erzielbar ist, weil sowohl die Trocknungskammer als auch der Zylinder in einer integrierten Baueinheit zusammenfaßbar sind.

Gemäß einem weiteren bevorzugten Ausführungsbeispiel ist der Übergangsbereich zwischen dem Durchmesser der Förderschnecke und dem Durchmesser der Extruderschnecke im wesentlichen kontinuierlich ausgebildet. Unter kontinuierlich soll in diesem Zusammenhang im wesentlich kegelförmig verstanden werden. Durch einen derartigen kegelförmigen Übergang zwischen den unterschiedlichen Durchmesserbereichen erfolgt ein kontinuierliches und gleichmäßiges Befüllen der Extruderschnecke mit dem Kunststoffgranulat.

Eine besonders energieökonomische Ausgestaltung des erfindungsgemäßen Extruders ergibt sich dann, wenn das Trocknungsmedium im wesentlichen mittels einer Wärmeübertragungseinrichtung aufheizbar ist, in welcher die Energie genutzt wird, welche bei der Kompression des Kunststoffgranulats in der Extruderschnecke frei wird, indem diese Energie an das Trocknungsmedium übertragen wird. Das aus der Trocknungskammer austretende Trocknungsmedium bzw. ein Teil davon wird vorzugsweise dieser Wärmeübertragungseinrichtung zugeführt, wodurch der Energieverlust des Trocknungsmediums, welches es durch Energieabgabe an das Granulat erfährt, ausgeglichen wird.

Gemäß nach einem weiteren bevorzugten Ausführungsbeispiel ist zwischen der Trocknungskammer und dem Zylinder des erfindungsgemäßen Extruders eine Dosiereinrichtung angeordnet, bei der der Querschnitt der Durchtrittsöffnung zur Regulierung der Verweilzeit des Kunststoffgranulats in der Trocknungskammer veränderbar ist. Eine solche, Dosiereinrichtung mit veränderbarer Durchtrittsöffnung ermöglicht es, daß die Trocknungskammer leicht an unterschiedliche Feuchtigkeitsgrade des zu trocknenden Granulats anpaßbar ist, ohne daß wesentliche Änderungen bezüglich des Verfahrensablaufs im Hinblick auf Temperatur des Trocknungsmediums oder Menge an der Trocknungskammer zugeführten Granulats vorgenommen werden müssen. Vorzugsweise ist die Dosiereinrichtung als Blende ausgebildet, deren Durchtrittsöffnung über einen einstellbaren Schieber regulierbar ist.

Gemäß noch einem weiteren bevorzugten Ausführungsbeispiel ist auch das Gehäuse der Trocknungskammer beheizbar. Dadurch ergibt sich eine höhere Flexibilität in der Verfahrensdurchführung beim Trocknen, da das zu trocknende Granulat sowohl vom Bereich der Förderschnecke selbst über das Trocknungsmedium als auch von der die Förderschnecke umgebenden Wand eine entsprechende Energiezufuhr erfährt.

Da während des Extrudiervorganges dem Kunststoffgranulat beim Durchlaufen der Extrudierstufe Arbeit zugeführt wird, wird dessen innere Energie erhöht, wodurch flüchtige Bestandteile ausgetrieben werden. Deshalb ist bei einem weiteren bevorzugten Ausführungsbeispiel der Erfindung in der Wandung des die Extruderschnecke umgebenden Zylinders zumindest ein Auslaßkanal zum Ablassen freiwerdender oder sich bildender Gase vorgesehen. Je nach Art der Gase können diese aufgefangen oder ins Freie abgelassen werden.

Die Trocknung des Granulats in der Trocknungskammer wird somit durch mechanische Energie in Form von Reibung, durch Wärmeübertragung über den Kontakt des zu trocknenden Granulats mit der Oberfläche der Schnecke sowie durch Wärmeübertragung beim Umströmen der Granulatteilchen mit dem Trocknungsmedium erreicht.

Neben der Regulierung der Verweilzeit des zu trocknenden Mediums in der Trocknungskammer des zweistufigen Extruders mittels der Dosiereinrichtung kann diese Dosiereinrichtung auch dazu benutzt werden, einen unterfütterten Betrieb des Extruders in der eigentlichen Extrudierstrufe zu realisieren.

Weitere Vorteile, Merkmale und Anwendungsmöglichkeiten der vorliegenden Erfindung werden nun anhand von Ausführungsbeispielen unter Bezugnahme auf die Zeichnungen näher erläutert.

In den Zeichnungen zeigen:
- Fig. 1: einen zweistufigen Extruder mit Trocknungsstufe und Extrudierstufe gemäß der Erfindung mit einem Antrieb der gemeinsamen Welle von der Seite der Extrudierstufe;
- Fig. 2: ein Ausführungsbeispiel gemäß der Erfindung mit einem Antrieb für Förderschnecke und Extruderschnecke von der Seite der Trocknungsstufe;
- Fig. 3: ein Ausführungsbeispiel der Erfindung gemäß Fig. 2, jedoch mit kontinuierlichem Übergang zwischen der Trocknungsstufe und der Extrudierstufe.

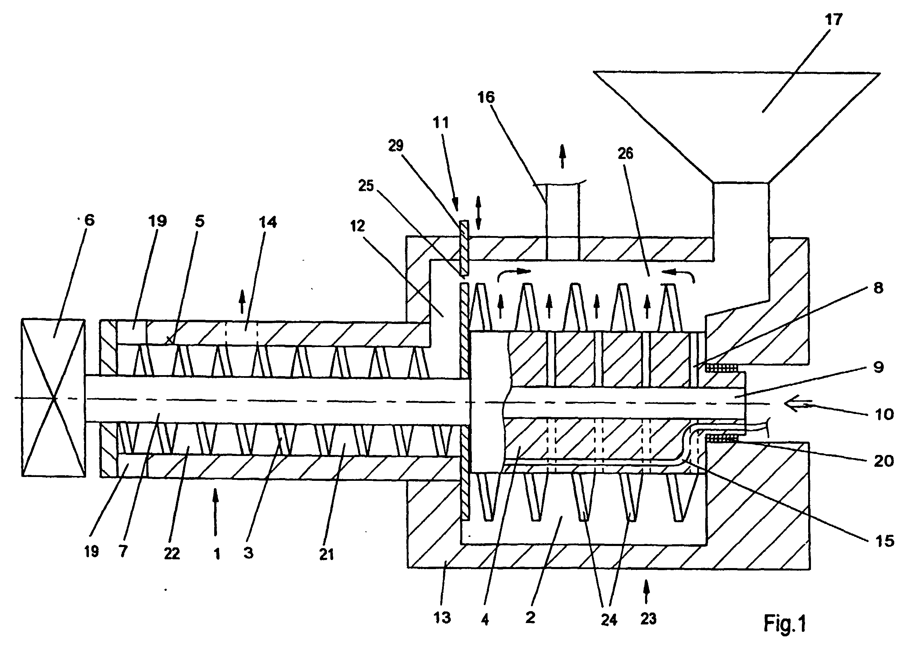

In Fig. 1 ist ein erfindungsgemäßer zweistufiger Extruder dargestellt, welcher eine Extrudierstufe 1 und eine Trocknungsstufe 23 aufweist. In der Extrudierstufe 1 ist eine Extruderschnecke 3 drehbar in einem Zylinder 5 angeordnet. Die Extruderschnecke 3 weist auf der Einlaßseite mit dem Einlaß 12 einen Förderabschnitt 21 und auf der Auslaßseite mit dem Auslaß einen Plastifizierabschnitt 22 auf. In der Trocknungsstufe 23 ist eine Förderschnecke 4 drehbar in einem Gehäuse 13 angeordnet. Zwischen der Förderschnecke 4 und dem Gehäuse 13 ist eine Trocknungskammer 2 gebildet. Die Förderschnecke 4 hat am Umfang mehrere Verdrängerelemente 24 angeordnet, die in die Trocknungskammer 2 hineinragen. Die Verdrängerelemente 24 können zum Beispiel Scheiben, Paddel, Schaufeln oder eine einen wendelförmigen Gang bildende Schnecke sein.

Sowohl die Extruderschnecke 3 als auch die Förderschnecke 4 sind auf einer gemeinsamen Welle 7 angeordnet. Damit der eigentliche Kompressionsvorgang in der Extrudierstufe 1 ablaufen kann, reicht das schraubenförmige Verdrängerelement (Schnecke) der Extruderschnecke 3 im wesentlichen bis an die Innenoberfläche des Zylinders 5.

Im Bereich der Trocknungsstufe 23 wird zu trocknendes Granulat 18, welches der Trocknungskammer 2 aus einem Sammeltrichter 17 vorzugsweise gesteuert zuführbar ist, durch die Förderschnecke 4 lediglich umgewälzt und gefördert, nicht jedoch komprimiert. Die Höhe der Verdrängerelemente 24 der Förderschnecke 4 ist so gestaltet, daß deren Außendurchmesser der Umhüllenden kleiner ist als der Innendurchmesser des zylindrisch ausgebildeten Gehäuses 13 und einen Luftspalt 26 bilden. Durch diesen radialen Ringraum ist ein verbesserter Wärmeaustausch zwischen einem Heizmedium 10 und dem zu erwärmenden Granulat 18 möglich. Desweiteren wird dadurch die Verweilzeit erhöht. Als Trocknungsmedium dient heiße Luft 10, welche über einen Kanal 9 im Innern der Förderschnecke 4 zugeführt wird. Dieser innere Kanal 9 ist über radial ausgebildete Zufuhrkanäle 8, welche zwischen die Verdrängerelemente zum Außenumfang der Förderschnecke 4 geführt sind, verbunden. Das so über den Kanal 9 zugeführte Trocknungsmedium strömt über die Kanäle 8 in den Bereich zwischen die Verdrängerelemente, in welchen sich das Granulat 18 ablagert.

Die Strömungsgeschwindigkeit des Trocknungsmediums 10 ist so gewählt, daß ein günstiger Wärmeaustausch zwischen der ihm und dem Granulat erzielt wird. Die Austrittsöffnung 16 für das Trocknungsmedium ist etwa in der Mitte der Längsausdehnung der Trocknungskammer 2 angeordnet. Dadurch wird ein Teil des zu erwärmenden Granulats 18 im Gegenstromverfahren, der andere Teil davon im Gleichstromverfahren in dem Ringraum erwärmt.

Es ist außerdem möglich, das Trocknungsmedium gemeinsam mit dem Granulat 18 über den Trichter 17 der Trocknungskammer 2 zuzuführen. Im Bereich der Trocknungskammer 2 ist die in einem Lager 20 abgestützte Förderschnecke 4 mit einer Heizeinrichtung 15 versehen. Diese Heizeinrichtung 15 kann eine elektrische Heizeinrichtung sein, sie kann jedoch auch als Ölheizung ausgebildet sein. Sie dient dazu, eine höhere Flexibilität der Trocknungsstufe 23 zu erzielen. Prinzipiell ist es somit möglich, die Trocknung des Granulats 18 durch Zufuhr eines Trocknungsmediums 10 und/oder durch Versehen der Förderschnecke 4 mit einer Heizeinrichtung 15 und/oder des Gehäuses 13 der Trocknungskammer 2 zusätzlich mit einer Heizeinrichtung zu erzielen.

Im Übergangsbereich von der Trocknungskammer 2 zu dem Zylinder 5 ist eine Dosiereinrichtung 11 in Form einer Blende angeordnet. Diese Blende ist bezüglich der Durchtrittsöffnung 25 einstellbar, was durch den Doppelpfeil angedeutet ist. Hierzu wird ein Schieber 29 verstellt. Durch Regulierung der Durchtrittsöffnung 25 der Blende 11 ist es möglich, die Verweilzeit des Granulats 18 in der ersten Verarbeitungsstufe des Extruders zu variieren, womit ein individueller Trocknungsgrad des Granulates, welcher vom Polymer abhängig ist, einstellbar ist. Das im Bereich der Trocknungskammer 2 nicht komprimierte Granulat 18 gelangt durch die Durchtrittsöffnung 25 zu dem Einlaß 12 in die Extrudierstufe 1. Durch das Komprimieren mittels der Extruderschnecke 3 wird das zu extrudierende Medium weiter erwärmt, wodurch je nach Trocknungsgrad flüchtige Bestandteile freigesetzt werden. Diese flüchtigen Bestandteile könnten über eine Austrittsöffnung 14 austreten; sie werden dort je nach ihrer Art und Zusammensetzung aufgefangen oder ins Freie geleitet. Am Ende der Extrudierstufe 1 ist ein radial gerichteter Auslaß 19 vorgesehen, durch welchen das vollständig extrudierte Kunststoffgranulat austritt.

Bei dem beschriebenen Ausführungsbeispiel wird das Trocknungsmedium 10 auf der Seite der Trocknungsstufe 2 axial dem inneren Kanal 9 der Förderschnecke 4 zugeführt. Deshalb ist die Antriebseinheit 6 für die gemeinsame Welle 7 der Extruderschnecke 3 und der Förderschnecke 4 auf der Seite der Extrudiereinheit 1 angeordnet.

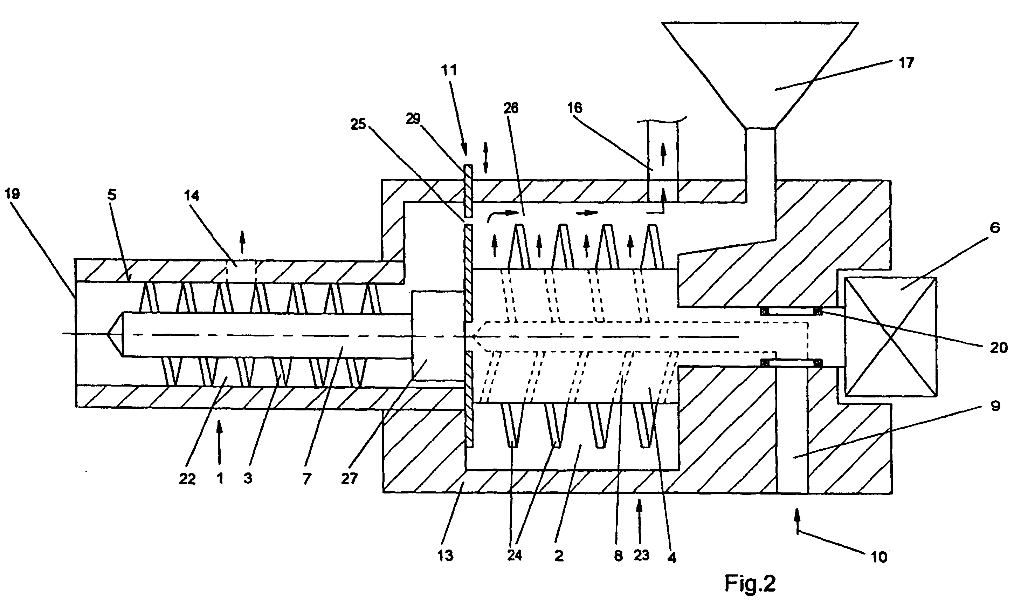

In Fig. 2 ist ein weiteres Ausführungsbeispiel des erfindungsgemäßen Extruders dargestellt, das im wesentlichen dem Ausführungsbeispiel gemäß Fig. 1 entspricht. Im Unterschied zu dem Extruder nach Fig. 1 ist die Zufuhr des Trocknungsmediums 10 in den in der Förderschnecke 4 liegenden Kanal 9 über eine radiale Kanalführung durch den Gehäuseblock der Trocknungskammer 2 geführt. Bei einer solchen Zufuhr des Trocknungsmediums 9 ist es möglich, die Antriebseinrichtung 6 für die Förderschnecke 4 und die Extruderschnecke 3 dennoch auf der Seite der Trocknungsstufe 23 anzuordnen. Die Heizeinrichtung der Förderschnecke 4 ist in Fig. 2 nicht gezeigt. Bei diesem Ausführungsbeispiel werden die Förderschnecke 4 und die Extruderschnecke 3 durch zwei Wellen gebildet, die mittels eines Getriebes 27 miteinander gekoppelt sind. Hierbei können die Förderschnecke 4 und die Extruderschnecke mit unterschiedlichen Drehzahlen betrieben werden, die durch das Übersetzungsverhältnis des Getriebes 27 und der Antriebseinrichtung 6 bestimmt sind. Die Förderschnecke 3 ist einseitig durch ein Lager 20 im Gehäuse 13 der Trocknungskammer 2 gelagert. Die Extruderschnecke 3 stützt sich an der Innenwand des Zylinders 5 in der Extrudierstufe 1 ab.

Der Austrittskanal 16 für das Trocknungsmedium 10 aus der Trocknungskammer 2 ist in der Nähe des Granulatzufuhrtrichters 17 angeordnet. Dadurch wird ein im wesentlichen vollständiges Gegenstromprinzip für das zu erwärmende bzw. zu trocknende Granulat 18 realisiert, indem das Trocknungsmedium 10 entgegen der Förderrichtung der Förderschnecke 4 strömt. Der Vorteil des Gegenstromverfahrens liegt in an sich bekannter Weise in einer verbesserten Wärmeübertragung vom Trocknungsmedium 10 zu dem Granulat 18.

Durch die Anordnung des Antriebsmotors 6 auf der Seite der Trocknungsstufe 2 ist es möglich, eine axial angeordnete Austrittsöffnung 19 aus der Extrudierstufe 1 vorzusehen. Diese konstruktive Gestaltung kann somit weiterhin zu einer Senkung des für den Extrudiervorgang erforderlichen Energieaufwands beitragen, da der Austrag des vollständig extrudierten Kunststoffgranulats ohne zusätzliche Umlenkung am Ende der Extrudierstufe 1 erfolgt.

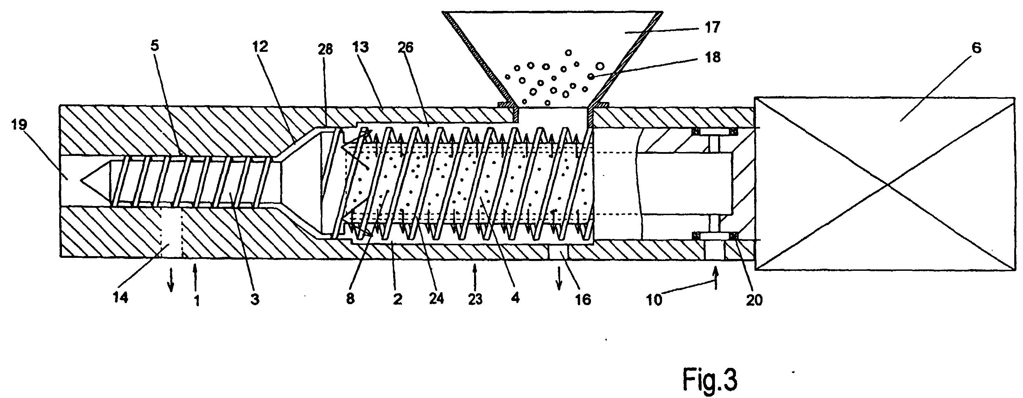

In Fig. 3 ist ein weiteres Ausführungsbeispiel der Erfindung dargestellt, welches im wesentlichen dem Ausführungsbeispiel gemäß Fig. 2 entspricht, bei welchem jedoch im Bereich zwischen der Trocknungskammer 2 und dem Zylinder 5, das heißt der Förderschnecke 4 der Trocknungskammer 2 mit größerem Durchmesser und der Extruderschnecke 3 der Extrudierstufe 1 mit geringerem Durchmesser, ein im wesentlichen kontinuierlicher Übergang vorgesehen ist. Der kontinuierliche Übergang ist in Form eines kegelförmigen, d.h. trichterförmigen Einlasses 12 realisiert.

Von einem Einfüllstutzen 17 gelangt das Kunststoffgranulat 18 direkt in die Trocknungskammer 2. Die in der Trocknungskammer 2 hohl ausgebildete Förderschnecke wird mit heißem Trocknungsmedium 10 versorgt, welches über radial ausgebildete Kanäle 8 in den wendelförmigen Gängen nach außen zu dem zu trocknenden Kunststoffgranulat geführt wird. Durch die gleichmäßige Steigung der Schnecke und durch den Ringraum zwischen dem Außenumfang der Schnecke und dem Innenumfang des Gehäuses 13 wird das Granulat 18 in der Trocknungskammer 2 lediglich gefördert, nicht jedoch verdichtet. Während dieser Förderung wird das Granulat 18 entsprechend getrocknet. Da der Austrittskanal 16 für das Trocknungsmedium aus der Trocknungsstufe 2 im Bereich des Eintritts des Granulats 18 angeordnet ist, wird ein Gegenstromprinzip bei der Erwärmung des Granulats 18 durch das Trocknungsmedium in der Trocknungsstufe 2 nahezu verwirklicht.

Das getrocknete Granulat 18 wird über den Einlaß 12 zum Zylinder 5 mit der Extruderschnecke 3 geführt. Eine Dosierung des Granulats wird hierbei durch einen am Ende der Trocknungskammer 2 ausgebildeten Absatz 28 erreicht, der das Verdrängerelement der Förderschnecke 4 ohne Luftspalt umhüllt. Somit gelangt eine durch den Einschnitt der Förderschnecke 4 vorbestimmte Menge an Granulat kontinuierlich zur Extruderschnecke 3. Die Verdichtung und der weitere Extrudiervorgang erfolgen dann in der Extrudierstufe 1. Im unteren, das heißt stromabwärtigen Drittel der Extrudierstufe 1 könnte ein Austrittskanal 14 für durch den Extrudiervorgang freiwerdende flüchtige Bestandteile vorgesehen werden, falls der Trocknungsgrad des Granulats dies erfordert. Der Austritt 19 für das fertig extrudierte Kunststoffgranulat ist axial realisiert, da der Antrieb der gemeinsamen Welle 7 für die Extruderschnecke 3 und die Förderschnecke 4 auf der Seite der Trocknungskammer 2 durch die gemeinsame Antriebseinheit 6 realisiert ist. Bei dieser Anordnung sind zudem der Zylinder 5 und die Trocknungskammer 2 in einem gemeinsamen Gehäuse 13 eingebracht.

Den beschriebenen Ausführungsbeispielen ist gemein, daß die Trocknungskammer 2 und die Förderschnecke 4 mit einem größeren Durchmesser ausgeführt sind, während der Durchmesser des Kompressionsabschnittes, das heißt der Zylinder 5 mit der Extruderschnecke 3 geringer ausgeführt ist. Desweiteren ist zwischen der Förderschnecke 4 und dem Gehäuse 13 ein ringförmiger Luftspalt 26 gebildet, so daß hohe Verweilzeiten erreicht werden, die im Bereich von ca. 20 Minuten bis zu 1 Stunde liegen. Die Förderschnecke 4 besitzt zudem weit ausgeschnittene oder mit entsprechend großem Einschnitt am Umfang angebrachte Verdrängerelemente 24, um damit eine große Wärme abgebende Oberfläche zum Trocknen des Granulats zu besitzen.

Darüber hinaus sind bei den beschriebenen Ausführungsbeispielen die axialen Ausdehnungen der Trocknungskammer 2 sowie des Zylinders jeweils nahezu gleich ausgeführt. Es ist jedoch auch möglich, daß der Trocknungsabschnitt länger ausgebildet, der Kompressionsabschnitt dagegen kürzer ausgeführt ist. Das richtet sich jeweils nach dem zu erzielenden Trocknungsgrad bzw. nach dem eingesetzten Polymer und darüber hinaus nach dem zu erzielenden Kompressionsgrad. Darüber hinaus ist es auch möglich, daß beide Stufen mit nahezu gleichem Durchmesser ausgebildet sind, jedoch die Schnecken jeweils unterschiedliche Steigungen aufweisen. Im Bereich der Trocknungskammer 2 ist bei einem solchen Ausführungsbeispiel die Steigung der Schnecke im wesentlichen konstant, während sie in der Kompressionszone veränderlich ist. Vorzugsweise ist in der Kompressionszone eine abnehmende Gangtiefe vorgesehen.

### BEZUGSZEICHENLISTE

- 1: Extrudierstufe
- 2: Trocknungskammer
- 3: Extruderschnecke
- 4: Förderschnecke
- 5: Zylinder
- 6: Antriebseinrichtung
- 7: Welle
- 8: Kanäle, Austrittsbohrung
- 9: Kanal
- 10: Trocknungsmedium
- 11: Dosiereinrichtung
- 12: Einlaß
- 13: Gehäuse
- 14: Austrittsöffnung
- 15: Heizeinrichtung
- 16: Austrittskanal
- 17: Einfülltrichter
- 18: Kunststoffgranulat
- 19: Auslaß
- 20: Lager
- 21: Förderabschnitt
- 22: Plastifizierungsabschnitt
- 23: Trocknungsstufe
- 24: Verdrängerelement
- 25: Durchtrittsöffnung
- 26: Luftspalt
- 27: Getriebe
- 28: Absatz
- 29: Schieber

## Patentansprüche

1. Extruder zum Aufschmelzen eines Kunststoffgranulates, welcher eine Extruderschnecke (3) mit einem Förderabschnitt und einem Plastifizierabschnitt aufweist, welche in einem beheizbaren Zylinder (5) mittels einer Antriebseinrichtung (6) drehbar angeordnet ist,
wobei der Extruderschnecke (3) eine Trocknungskammer (2) und eine Förderschnecke (4) vorgeschaltet sind und
wobei die Förderschnecke (4) das Kunststoffgranulat kompressionsfrei kontinuierlich zur Extruderschnecke (3) fördert,
dadurch gekennzeichnet, daß
die Förderschnecke (4) einen größeren Außendurchmesser als die Extruderschnecke (3) aufweist und
daß die Förderschnecke (4) zum Trocknen des Kunststoffgranulates beheizbar ausgebildet und innerhalb der Trocknungskammer (2) angeordnet ist.

2. Extruder nach Anspruch 1, dadurch gekennzeichnet, daß die Förderschnecke (4) größer eingeschnittene Verdrängerelemente (24) aufweist als die Extruderschnecke (3).

3. Extruder nach Anspruch 1 oder 2,
dadurch gekennzeichnet, daß
ein Luftspalt zwischen dem Außendurchmesser der Förderschnecke (4) und der Wandung der Trocknungskammer (2) gebildet ist.

4. Extruder nach einem der Ansprüche 1 bis 3,
dadurch gekennzeichnet, daß
die Förderschnecke (4) mehrere am Umfang angeordnete Verdrängerelemente (24) aufweist.

5. Extruder nach einem der Ansprüche 1 bis 4,
dadurch gekennzeichnet, daß
die Trocknungskammer (2) Kanäle (8) zur Zufuhr eines Trocknungsmediums (10) zum Trocknen des Kunststoffgranulates aufweist.

6. Extruder nach Anspruch 5,
dadurch gekennzeichnet, daß
die Förderschnecke (4) einen inneren Kanal (9) und mit diesem verbundene radial zur Trocknungskammer (2) gerichtete Kanäle (8) zur Zufuhr des Trocknungsmediums (10) aufweist.

7. Extruder nach Anspruch 5 oder 6,
dadurch gekennzeichnet, daß
das Trocknungsmedium (10) im Gegenstrom zu der Förderrichtung des Kunststoffgranulats eingebrachte heiße Luft ist.

8. Extruder nach einem der Ansprüche 5 bis 7,
dadurch gekennzeichnet, daß
das Trocknungsmedium (10) im wesentlichen mittels einer Wärmeübertragungseinrichtung aufheizbar ist, mittels welcher Energie des mit Kompression arbeitenden Extrudierabschnittes an das Trocknungsmedium (10) übertragbar ist.

9. Extruder nach einem der Ansprüche 1 bis 8,
dadurch gekennzeichnet, daß
die Extruderschnecke (3) und die Förderschnecke (4) koaxial zueinander angeordnet sind und gemeinsam mittels der Antriebseinrichtung (6) antreibbar sind.

10. Extruder nach Anspruch 9,
dadurch gekennzeichnet, daß
die Extruderschnecke (3) und die Förderschnecke (4) durch eine gemeinsame Welle (7) gebildet sind.

11. Extruder nach Anspruch 9,
dadurch gekennzeichnet, daß
die Extruderschnecke (3) und die Förderschnecke (4) mittels eines Getriebes (27) zur Übertragung der Rotation miteinander gekoppelt sind.

12. Extruder nach einem der Ansprüche 9 bis 11,
dadurch gekennzeichnet, daß
der Zylinder (5) und die Trocknungskammer (2) durch ein gemeinsames Gehäuse (13) gebildet sind.

13. Extruder nach Anspruch 12,
dadurch gekennzeichnet, daß
der Übergangsbereich zwischen dem Durchmesser der Förderschnecke (4) und dem Durchmesser der Extruderschnecke (3) im wesentlichen kontinuierlich ausgebildet ist.

14. Extruder nach einem der Ansprüche 1 bis 13,
dadurch gekennzeichnet, daß
zwischen der Trocknungskammer (2) und dem Zylinder (5) eine Dosiereinrichtung (11) angeordnet ist, bei der der Querschnitt der Durchtrittsöffnung (25) zur Regelung der Verweilzeit des Kunststoffgranulats in der Trocknungskammer (2) veränderbar ist.

15. Extruder nach einem der Ansprüche 1 bis 14,
dadurch gekennzeichnet, daß
die Trocknungskammer (2) beheizbar ausgebildet ist.

16. Extruder nach einem der Ansprüche 1 bis 15,
dadurch gekennzeichnet, daß
in der Wandung des Zylinders (5) der Extruderschnecke (3) zumindest ein Auslaßkanal (14) zum Ablassen freiwerdender oder sich bildender Gase vorgesehen ist.

## Claims

1. Extruder for melting plastic granules which has an extruder screw (3) with a conveying portion and a plasticising portion, which extruder screw is rotatably arranged in a heatable cylinder (5) by means of a drive device (6), wherein a drying chamber (2) and a conveying screw (4) are connected upstream of the extruder screw (3) and wherein the conveyor screw (4) conveys the plastic granules continuously and without compression to the extruder screw (3), characterised in that the conveyor screw (4) has a larger external diameter than the extruder screw (3) and in that the conveyor screw (4) is heatable in design for drying the plastic granules and is arranged inside the drying chamber (2).

2. Extruder according to claim 1, characterised in that the conveyor screw (4) has more deeply indented displacement elements (24) than the extruder screw (3).

3. Extruder according to claim 1 or 2, characterised in that an air gap is formed between the external diameter of the conveyor screw (4) and the wall of the drying chamber (2).

4. Extruder according to any one of claims 1 to 3, characterised in that the conveyor screw (4) has a plurality of displacement elements (24) arranged on the periphery.

5. Extruder according to any one of claims 1 to 4, characterised in that the drying chamber (2) has channels (8) for feeding a drying medium (10) for drying the plastic granules.

6. Extruder according to claim 5, characterised in that the conveyor screw (4) has an inner channel (9) and channels (8) connected thereto directed radially to the drying chamber (2) for feeding the drying medium (10).

7. Extruder according to claim 5 or 6, characterised in that the drying medium (10) is hot air introduced in a countercurrent flow to the conveying direction of the plastic granules.

8. Extruder according to any one of claims 5 to 7, characterised in that the drying medium (10) can be heated substantially by heat exchange means, by means of which energy from the extruder portion operating with compression can be transmitted to the drying medium (10).

9. Extruder according to any one of claims 1 to 8, characterised in that the extruder screw (3) and the conveying screw (4) are arranged coaxially to one another and can be driven together by means of the drive unit (6).

10. Extruder according to claim 9, characterised in that the extruder screw (3) and the conveying screw (4) are formed by a common shaft (7).

11. Extruder according to claim 9, characterised in that the extruder screw (3) and the conveying screw (4) are coupled to one another by means of a transmission (27) for transmitting rotation.

12. Extruder according to any one of claims 9 to 11, characterised in that the cylinder (5) and the drying chamber (2) are formed by a common housing (13).

13. Extruder according to claim 12, characterised in that the transition region between the diameter of the conveying screw (4) and the diameter of the extruder screw (3) is substantially continuous in design.

14. Extruder according to any one of claims 1 to 13, characterised in that a metering device (11) is arranged between the drying chamber (2) and the cylinder (5), in which metering device (11) the cross-section of the through aperture (25) can be changed for adjusting the residence time of the plastic granules in the drying chamber (2).

15. Extruder according to any one of claims 1 to 14, characterised in that the drying chamber (2) is heatable in design.

16. Extruder according to any one of claims 1 to 15, characterised in that at least one outlet channel (14) for removing liberated or forming gases is provided in the wall of the cylinder (5) of the extruder screw (3).

## Revendications

1. Extrudeuse pour fondre des granulés en matière synthétique présentant une vis d'extrudeuse (3) avec une partie transport et une partie plastification, qui à l'aide d'un moyen d'entraînement (6) est agencée de façon rotative dans un cylindre (5) pouvant être chauffé, la vis d'extrudeuse (3) étant précédée d'une chambre de séchage (2) et d'une vis d'alimentation (4) et la vis d'alimentation (4) fournissant continuellement sans compression les granulés en matière synthétique à la vis d'extrudeuse (3), caractérisée en ce que la vis d'alimentation (4) présente un diamètre plus élevé que la vis d'extrudeuse (3) et en ce que pour le séchage des granulés en matière synthétique la vis d'alimentation (4) est réalisée de façon à pouvoir être chauffée et est agencée à l'intérieur de la chambre de séchage (2).

2. Extrudeuse selon la revendication 1, caractérisée en ce que la vis d'alimentation (4) présente des éléments de déplacement incisés (24) plus grands que la vis d'extrudeuse (3).

3. Extrudeuse selon la revendication 1 ou 2, caractérisée en ce qu'une fente d'aération est formée entre le diamètre extérieur de la vis d'alimentation (4) et la paroi de la chambre de séchage (2).

4. Extrudeuse selon l'une des revendications 1 à 3, caractérisée en ce que la vis d'alimentation (4) présente plusieurs éléments de déplacement (24) agencés au niveau de la périphérie.

5. Extrudeuse selon l'une des revendications 1 à 4, caractérisée en ce que la chambre de séchage (2) présente des canaux (8) pour fournir un milieu de séchage (10) pour sécher les granulés en matière synthétique.

6. Extrudeuse selon la revendication 5, caractérisée en ce que la vis d'alimentation (4) présente un canal intérieur (9) et des canaux (8) reliés à celui-ci et dirigés radialement vers la chambre de séchage (2) pour fournir le milieu de séchage (10).

7. Extrudeuse selon la revendication 5 ou 6, caractérisée en ce que le milieu de séchage (10) est de l'air chaud introduit en contre-courent à la direction de transport des granulés en matière synthétique.

8. Extrudeuse selon l'une des revendications 5 à 7, caractérisée en ce que le milieu de séchage (10) peut globalement être chauffé par un moyen de transmission thermique au moyen duquel de l'énergie de la partie extrusion travaillant avec de la compression peut être transmise au milieu de séchage (10).

9. Extrudeuse selon l'une des revendications 1 à 8, caractérisée en ce que la vis d'extrudeuse (3) et la vis d'alimentation (4) sont agencées de façon coaxiale l'une par rapport à l'autre et peuvent être entraînées ensemble à l'aide du moyen d'entraînement (6).

10. Extrudeuse selon la revendication 9, caractérisée en ce que la vis d'extrudeuse (3) et la vis d'alimentation (4) sont formées par un arbre commun (7).

11. Extrudeuse selon la revendication 9, caractérisée en ce que la vis d'extrudeuse (3) et la vis d'alimentation (4) sont couplées au moyen d'un engrenage (27) pour la transmission de la rotation.

12. Extrudeuse selon l'une des revendications 9 à 11, caractérisée en ce que le cylindre (5) et la chambre de séchage (2) sont formés par un boîtier commun (13).

13. Extrudeuse selon la revendication 12, caractérisée en ce que la zone de transition entre le diamètre de la vis d'alimentation (4) et le diamètre de la vis d'extrudeuse (3) est réalisée sensiblement de manière continue.

14. Extrudeuse selon l'une des revendications 1 à 13, caractérisée en ce qu'entre la chambre de séchage (2) et le cylindre (5) un moyen d'alimentation (11) est agencé, dans le cas duquel la section de l'ouverture de passage (25) peut être changée pour régler la durée de séjour des granulés en matière synthétique dans la chambre de séchage (2).

15. Extrudeuse selon l'une des revendications 1 à 14, caractérisée en ce que la chambre de séchage (2) est réalisée de manière à pouvoir être chauffée.
